(19) Europäisches Patentamt
European Patent Office
Office européen des brevets

(11) **EP 4 287 381 B1**

(12) **EUROPEAN PATENT SPECIFICATION**

(45) Date of publication and mention
of the grant of the patent:
**22.04.2026 Bulletin 2026/17**

(21) Application number: **22883911.4**

(22) Date of filing: **17.10.2022**

(51) International Patent Classification (IPC):
*H01M 50/383* (2021.01)   *H01M 50/358* (2021.01)
*H01M 10/6556* (2014.01)   *H01M 10/6567* (2014.01)
*H01M 10/613* (2014.01)   *H01M 50/249* (2021.01)
*H01M 10/625* (2014.01)   *H01M 50/209* (2021.01)

(52) Cooperative Patent Classification (CPC):
**H01M 10/613; H01M 10/625; H01M 10/6556;
H01M 10/6567; H01M 50/209; H01M 50/249;
H01M 50/358; H01M 50/383;** H01M 2200/20;
Y02E 60/10

(86) International application number:
**PCT/KR2022/015693**

(87) International publication number:
**WO 2023/068688 (27.04.2023 Gazette 2023/17)**

(54) **BATTERY MODULE WITH REINFORCED SAFETY**

BATTERIEMODUL MIT VERSTÄRKTER SICHERHEIT

MODULE DE BATTERIE À SÉCURITÉ RENFORCÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.10.2021 KR 20210138849**

(43) Date of publication of application:
**06.12.2023 Bulletin 2023/49**

(73) Proprietor: **LG Energy Solution, Ltd.
Seoul 07335 (KR)**

(72) Inventors:
• **JANG, Sung-Hwan
Daejeon 34122 (KR)**
• **SEONG, Jun-Yeob
Daejeon 34122 (KR)**
• **JUNG, Hye-Mi
Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 3 396 776     EP-A1- 3 731 304
WO-A1-2021/206514     CN-A- 112 290 110
CN-U- 212 967 875     JP-A- 2009 134 936
JP-A- 2014 160 571     JP-A- 2014 160 571
JP-A- 2017 228 495**

**Description**

TECHNICAL FIELD

The present application claims priority to Korean Patent Application No. 10-2021-0138849 filed on October 18, 2021 in the Republic of Korea.

The present disclosure relates to a battery, and more particularly, to a battery module with improved safety and a battery pack and a vehicle including the same.

BACKGROUND ART

As the demand for portable electronic products such as laptops, video cameras, and mobile phones has recently rapidly increased and the commercialization of robots, electric vehicles, etc. has begun in earnest, research on high-performance secondary batteries capable of repeated charging/discharging has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated with an electrolyte, that is, a battery case.

**In** general, according to a shape of a casing, lithium secondary batteries may be classified into can-type secondary batteries in which an electrode assembly is received in a metal can, and pouch-type secondary batteries in which an electrode assembly is received in a pouch of an aluminum laminate sheet.

Recently, secondary batteries have been widely used for driving or energy storage not only in small devices such as portable electronic devices but also in medium and large-sized devices such as electric vehicles and energy storage systems (ESSs). A plurality of secondary batteries may be electrically connected to each other and accommodated together in a module case to constitute one battery module. A plurality of battery modules may be connected to each other to constitute one battery pack.

However, when a plurality of battery modules are included in a battery pack, the battery pack may be vulnerable to a thermal chain reaction between the battery modules. For example, when an event such as thermal runaway occurs in one battery module, it is necessary to suppress propagation of the thermal runaway to other battery modules. When propagation of thermal runaway between battery modules is not appropriately suppressed, an event occurring in a specific module may cause a chain reaction in several battery modules, which may cause a big problem such as an explosion or fire.

In particular, when an event such as thermal runaway occurs in any one battery module, heat or gas may be discharged to the outside. In this case, when the discharge of heat or gas is not appropriately controlled, the heat or gas may be transferred to other battery modules, which may cause a thermal chain reaction of the other battery modules.

JP 2014 160571 A describes a battery module including multiple storage batteries; a lower case; an upper case which is attached to the lower case from above and forms a battery storage space; a circuit board disposed on an upper surface of the upper case; and a cover which forms a substrate storage space between itself and the upper case. A communication port which enables the battery storage space and the substrate storage space to communicate with each other is formed on the upper surface of the upper case. The battery module is formed so that when heated air in the battery storage space flows into the substrate storage space via the communication port, air flows into the battery storage space from a gap between the lower case and the upper case and air in the substrate storage space is exhausted from a gap between the upper case and the cover to the exterior.

DISCLOSURE

Technical Problem

The present disclosure is designed to solve the problems of the related art, and therefore the present disclosure is directed to providing a battery module having an improved structure to appropriately manage heat or gas discharged from the battery module, and a battery pack and a vehicle including the battery module.

However, the technical purpose to be solved by the present disclosure is not limited to the above, and other objects not mentioned herein will be clearly understood by one of ordinary skill in the art from the following disclosure.

Technical Solution

The present invention is defined by the subject matter according to the appended independent claims. Particular embodiments are given by the additional features of the appended dependent claims. In one aspect of the present disclosure, there is provided a battery module including a cell assembly including one or more battery cells, a module case having an inner space in which the cell assembly is accommodated, the module case including a venting hole through which venting gas generated from the cell assembly is discharged, a venting unit provided outside the module case, and configured to allow venting gas discharged from the venting hole to be introduced and discharged to an outside, and a cooling unit including at least a portion provided in a path through which the venting gas flows, the cooling unit being configured to absorb heat and release the heat to an outside.

Here, at least a portion of the cooling unit may be provided in the venting unit.

Also, the venting unit may have a plate shape in which at least an end is bent, and the bent end of the venting unit may be attached to an outer surface of the module case.

Also, at least a portion of the cooling unit may be located between an outer surface of the module case and an inner surface of the venting unit.

Also, at least a portion of the cooling unit may contact an outer surface of the module case.

Also, the cooling unit may include a cooling pipe including a hollow through which a cooling fluid flows.

Also, at least a portion of the cooling pipe may be bent in an inner space of the venting unit.

Also, the cooling unit may be configured to be ruptured by the venting gas.

Also, a rupture portion configured to be ruptured by a pre-set temperature or pressure may be pre-formed at a certain position in the cooling unit.

Also, the venting unit may be located on a side surface of the module case, wherein the rupture portion is located at an upper portion in an inner space of the venting unit.

In another aspect of the present disclosure, there is also provided a battery pack including the battery module.

In another aspect of the present disclosure, there is also provided a battery pack including one or more battery modules as disclosed herein, a pack housing having an inner space in which the one or more battery modules are accommodated, the pack housing including a pack hole, a venting unit mounted on the pack housing and configured to allow venting gas discharged from the pack hole to be introduced and discharged to an outside, and a cooling unit including at least a portion provided in a path through which the venting gas flows, the cooling unit being configured to absorb heat and release the heat to an outside.

In another aspect of the present disclosure, there is also provided a vehicle including the battery module.

Advantageous Effects

According to an aspect of the present disclosure, efficient cooling performance and safe venting performance of a battery module may be ensured.

Furthermore, in the present disclosure, even when an event such as thermal runaway occurs in a specific battery module, propagation of thermal runaway to other battery modules may be effectively suppressed.

In particular, according to an aspect of the present disclosure, with one cooling configuration, in a normal state, a temperature of a battery module may be lowered, and in an emergency situation, a temperature of venting gas may be lowered or a flame or spark included in the venting gas may be prevented from being discharged to the outside.

Accordingly, in the present disclosure, a battery module with excellent safety may be implemented.

Also, according to another aspect of the present disclosure, a battery module that may be easily assembled and miniaturized may be implemented.

The present disclosure may have various other effects, which will be described in each embodiment, or descriptions of effects that may be easily inferred by one of ordinary skill in the art will be omitted.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a combined perspective view schematically illustrating elements of a battery module, according to an embodiment of the present disclosure.
FIG. 2 is an exploded perspective view illustrating some elements of the battery module of FIG. 1.
FIG. 3 is a perspective view schematically illustrating elements of a venting unit included in a battery module, according to an embodiment of the present disclosure.
FIG. 4 is a front view schematically illustrating a state where the venting unit of FIG. 3 is combined with a module case.
FIG. 5 is a view illustrating some separated elements of a battery module, viewed from a side, according to an embodiment of the present disclosure.
FIG. 6 is a side view schematically illustrating a state where a portion of a cooling unit is ruptured, in a battery module, according to an embodiment of the present disclosure.
FIG. 7 is a side view schematically illustrating elements of a battery module, according to another embodiment of the present disclosure.
FIG. 8 is a cross-sectional view schematically illustrating elements of a battery module, according to still another embodiment of the present disclosure.
FIG. 9 is a perspective view schematically illustrating elements of a battery module, according to another embodiment of the present disclosure.

FIG. 10 is a cross-sectional view taken along line A6-A6' of FIG. 9, according to an example.

FIG. 11 is a view schematically illustrating some elements of a battery module, according to still another embodiment of the present disclosure.

FIG. 12 is a perspective view schematically illustrating elements of a battery module, according to still another embodiment of the present disclosure.

FIG. 13 is a view schematically illustrating a battery pack, viewed from above, according to an embodiment of the present disclosure.

FIG. 14 is a view illustrating a battery pack, viewed from above, according to another embodiment of the present disclosure.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure as defined by the following claims.

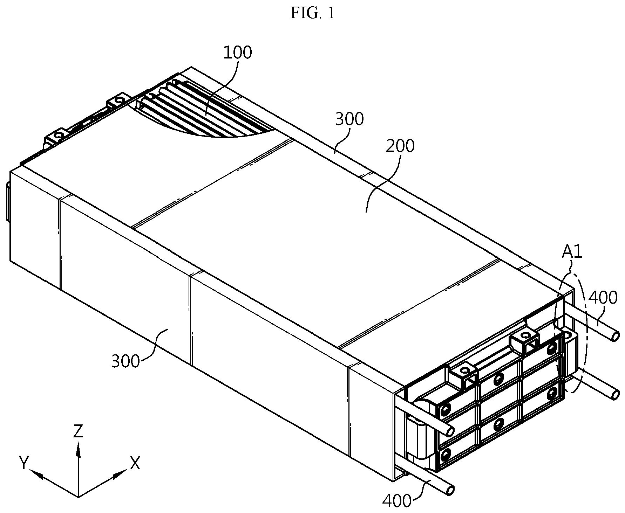

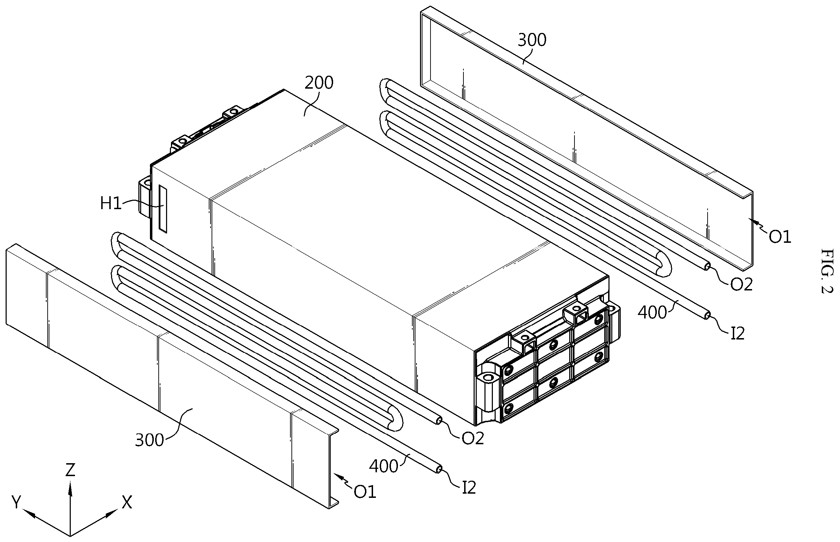

FIG. 1 is a combined perspective view schematically illustrating elements of a battery module, according to an embodiment of the present disclosure. FIG. 2 is an exploded perspective view illustrating some elements of the battery module of FIG. 1.

Referring to FIGS. 1 and 2, a battery module according to the present disclosure includes a cell assembly 100, a module case 200, a venting unit 300, and a cooling unit 400.

The cell assembly 100 may include one or more battery cells. Each battery cell may refer to a secondary battery. The secondary battery may include an electrode assembly, an electrolyte, and a battery case. In particular, the battery cell provided in the cell assembly 100 may be a pouch-type secondary battery. However, another type of secondary battery, for example, a cylindrical battery or a prismatic battery, may be applied to the cell assembly 100.

A plurality of secondary batteries may be stacked on each other to form the cell assembly 100. For example, the plurality of secondary batteries may be stacked by being arranged in a horizontal direction (x-axis direction) while erected in a vertical direction (z-axis direction). Each battery cell may include an electrode lead, and the electrode lead may be located at both ends or at one end of the battery cell. A secondary battery in which an electrode lead protrudes in both directions may be referred to as a bidirectional cell, and a secondary battery in which an electrode lead protrudes in one direction may be referred to as a unidirectional cell. However, the present disclosure is not limited to a specific type or shape of a secondary battery, and various types of secondary batteries known at the time of filing the present application may be applied to the cell assembly 100.

The module case 200 may have an empty inner space in which the cell assembly 100 is accommodated. For example, the module case 200 may include an upper plate, a lower plate, a left plate, a right plate, a front plate, and a rear plate to define the inner space. At least two of the upper plate, the lower plate, the left plate, the right plate, the front plate, and the rear plate may be integrally formed with each other. For example, the upper plate, the lower plate, the left plate, and the right plate may be integrally formed with each other. In this case, the integrated case may have a tubular shape, and may be referred to as a mono frame. In another example, the left plate, the right plate, the lower plate may be integrally formed with each other. In this case, the integrated case may be referred to as a U-frame due to its shape. In addition, the module case 200 may be configured in any of various other shapes.

A venting hole H1 may be formed on at least one side of the module case 200, as shown in FIG. 2. For example, the venting hole H1 may be formed in each of the left plate and the right plate of the module case 200. The venting hole H1 may be configured so that, when venting gas is generated and ejected from the cell assembly 100 accommodated in the inner space, the generated venting gas may be discharged through the venting hole H1 to an outer space of the module case 200. For example, the module case 200 may be sealed except for the venting hole H1. The venting hole H1 may be completely open to pass through the module case 200. Alternatively, the venting hole H1 may not be completely open, but may be configured so that the venting hole H1 is closed in a normal state and may be opened according to a change in pressure or temperature. Also, the venting hole H1 may extend long in one direction. For example, as shown in FIG. 2, the venting hole H1 may extend long in the vertical direction. Also, the venting hole H1 may be formed in side surfaces, in particular, a left surface and a right surface, of the module case 200. However, the venting hole H1 may be formed in other portions of the module case 200, for example, a top surface, a bottom surface, a front surface/or a rear surface. In addition, the venting hole H1 formed in the module case 200 may be formed in any of various other ways.

The venting unit 300 may be provided outside the module case 200. In particular, the venting unit 300 may be attached to a portion of the module case 200 where the venting hole H1 is formed. For example, as shown in FIG. 2, the venting hole H1 may be formed in the left surface of the module case 200. Also, although not shown, the venting hole H1 may also be formed in the right surface of the module case 200. In this case, the venting unit 300 may be attached to each of the left surface and the right surface of the module case 200.

The venting unit 300 may have a defined empty inner space, and may be configured so that venting gas discharged from the venting hole H1 flows through the defined space. That is, the venting unit 300 may be configured so that venting gas discharged from the venting hole H1 is introduced into the inner space. The venting unit 300 may be configured so that venting gas flowing in the inner space is discharged to the outside through a discharge outlet O1 shown in FIG. 2. Here, the inner space of the venting unit 300 may be referred to as a venting channel in that it is a space for guiding venting gas. That is, the venting unit 300 may include the venting channel through which venting gas may flow.

At least a portion of the cooling unit 400 may be provided in a path through which venting gas flows. That is, when venting gas is discharged from the cell assembly 100, the venting gas may flow in a space inside or outside the module case 200. In this case, the cooling unit 400 may be located together in the space where the venting gas of the module case 200 moves. The cooling unit 400 may be configured to absorb surrounding heat and release the heat to the outside. In particular, the cooling unit 400 may absorb heat of the module case 200 and may release the heat to the outside of the module case 200.

The cell assembly 100 may generate heat not only in an abnormal situation such as thermal runaway but also in a process of performing normal charging/-discharging. In this case, the cooling unit 400 may be configured to absorb heat generated from the cell assembly 100 and release the heat to the outside. In particular, the cooling unit 400 may absorb heat generated from the cell assembly 100 and transferred to the module case 200 and may release the heat to the outside of the module case 200.

Accordingly, according to this aspect of the present disclosure, in a normal use of a battery module, the performance of the battery module may be stably maintained through appropriate cooling. Also, according to this aspect of the present disclosure, when an abnormal situation such as thermal runaway occurs in a battery module, such heat may be released. In addition, according to this aspect of the present disclosure, through the cooling unit 400 provided inside or outside the module case 200, for example, a left side and/or a right side, heat transfer to other battery modules may be prevented. Hence, propagation of thermal runaway between battery modules may be effectively suppressed. Also, in this embodiment, a temperature of venting gas may be lowered by the cooling unit 400.

Accordingly, according to this aspect of the present disclosure, fire generation or spread due to venting gas or flame, propagation of thermal runway, etc. may be prevented.

At least a portion of the cooling unit 400 may be provided in the inner space of the venting unit 300. That is, at least a portion of the cooling unit 400 may be located in the venting channel that is the inner space of the venting unit 300. The cooling unit 400 may be configured to absorb heat of venting gas flowing in the venting channel and release the heat to the outside.

According to this embodiment of the present disclosure, performance of cooling venting gas and suppressing propagation of thermal runaway or fire may be further improved. In particular, before venting gas is discharged to the outside of the venting unit 300, the cooling unit 400 may lower a temperature of the venting gas. Furthermore, a flame or spark, and high-temperature active material particles may be included in venting gas discharged when an event such as thermal runaway occurs. In this case, the cooling unit 400 may suppress movement of the flame or spark and the active material particles and may lower a temperature thereof.

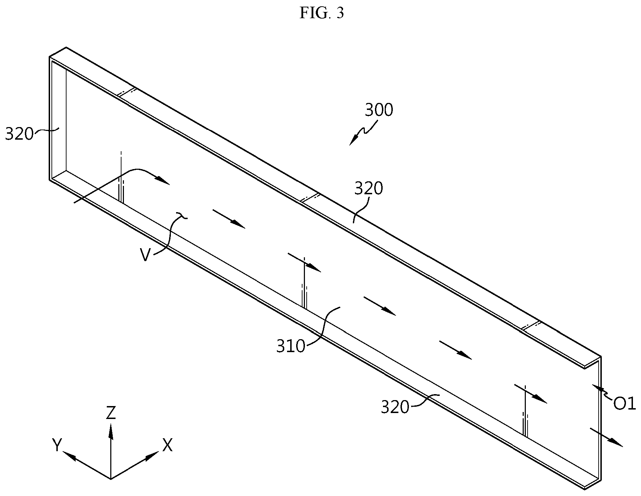

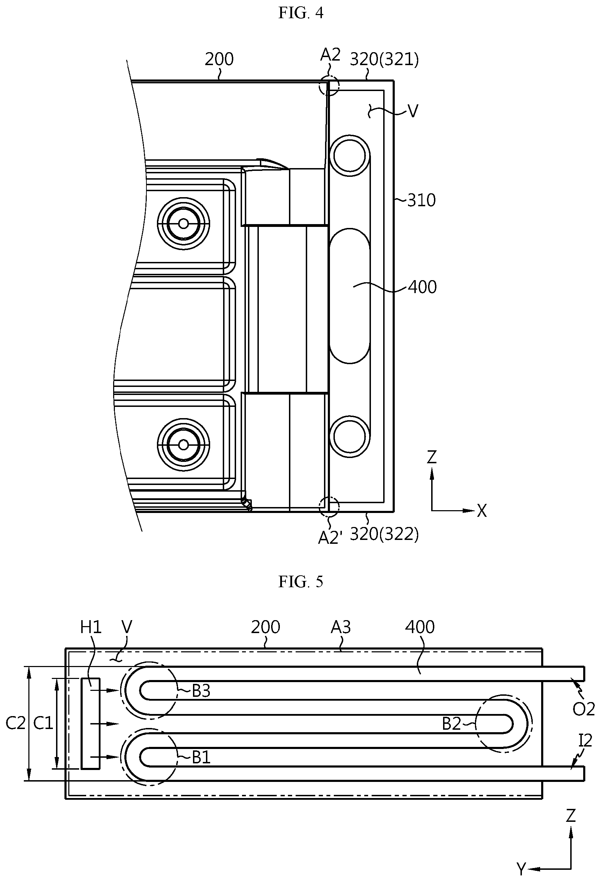

The venting unit 300 may have a plate shape in which at least an end is bent. The bent end of the venting unit 300 may be attached to an outer surface of the module case 200, which will be described in more detail with reference to FIGS. 3 and 4.

FIG. 3 is a perspective view schematically illustrating elements of the venting unit 300 included in a battery module, according to an embodiment of the present disclosure. FIG. 4 is a front view schematically illustrating a state where the venting unit 300 of FIG. 3 is combined with the module case 200. For example, FIG. 4 may be a front view illustrating a portion A1 of FIG. 1.

Referring to FIGS. 3 and 4, the venting unit 300 may include a main body 310 and a bent portion 320. The main body 310 may have a plate shape, and the bent portion 320 may be formed at an edge portion of the main body 310. In particular, the bent portion 320 may be integrally formed with the main body 310. Accordingly, the bent portion 320 may be formed by bending an edge portion of the main body 310 inward. An inward direction may be a direction toward the module case 200. In the present specification, unless otherwise specified, with respect to each element, an inward side may be a direction toward the center of the battery module and an outward direction may be a direction toward the outside of the battery module.

In the venting unit 300, the main body 310 may have a quadrangular plate shape, and the bent portion 320 may be formed at three edges from among four edges of the main body 310. For example, as shown in FIGS. 3 and 4, the bent portion 320 may be formed at an upper edge, a lower edge, and a rear edge of the main body 310. Because the bent portion 320 is not formed at a front edge of the main body 310, the discharge outlet O1 for discharging venting gas may be formed.

In this embodiment, the venting channel may be formed by being defined by the main body 310 and the bent portion 320 of the venting unit 300. That is, referring to a configuration of FIG. 4, a right surface of a venting channel V may be defined by the main body 310, and an upper portion and a lower portion of the venting channel V may be defined by the upper bent portion 320 and the lower bent portion 320. A rear portion of the venting channel V may be defined by the rear bent portion 320 of the venting unit 300.

A left portion of the venting channel V may be completely open, and the module case 200 may be located on the left portion. In particular, outer ends A2 and A2' of the upper bent portion 320 and the lower bent portion 320 of the venting unit 300 may be attached to an outer surface of the module case 200, as shown in FIG. 4. Also, the rear bent portion 320 of the venting unit 300 may be attached to the outer surface of the module case 200. An attached portion between the module case 200 and each bent portion 320 of the venting unit 300 may be sealed so that venting gas does not leak out. For example, an end of each bent portion 320 of the venting unit 300 may be laser welded to the outer surface of the module case 200. Also, the venting unit 300 and the module case 200 may be coupled to each other in various other ways.

As such, the venting channel V may be formed by the venting unit 300 and the outer surface of the module case 200. Venting gas discharged from the venting hole H1 may flow in the venting channel V and may be discharged to the discharge outlet O1 as marked by an arrow in FIG. 3.

According to this configuration of the present disclosure, a configuration for guiding venting gas in the battery module may have a simple structure and may be provided in an easy assembly method. In particular, according to this embodiment of the present disclosure, only the venting hole H1 needs to be formed in the module case 200, and most of conventional battery module elements may be used. Accordingly, it is not necessary to significantly change or complicate a design or a manufacturing method of the module case 200 or internal elements of the module case 200. Hence, the battery module according to the present disclosure may be easily manufactured.

At least a portion of the cooling unit 400 may be located between the outer surface of the module case 200 and an inner surface of the venting unit 300. For example, referring to the configuration of FIG. 4, the cooling unit 400 may be located between a right surface of the module case 200 and a left surface of the main body 310 of the venting unit 300. Also, the cooling unit 400 may be located in a space between the upper and lower bent portions 320 of the venting unit 300. The cooling unit 400 may be located between the rear bent portion 320 of the venting unit 300 and the front discharge outlet O1.

According to this embodiment of the present disclosure, the battery module may be easily assembled and manufactured. For example, the battery module according to the present disclosure may be manufactured by locating, while the cell assembly 100 is accommodated in the module case 200, the cooling unit 400 outside the module case 200 and covering an outer surface of the cooling unit 400 with the venting unit 300. Alternatively, the battery module according to the present disclosure may be manufactured by attaching the venting unit 300 to an outer surface of the module case 200 and then inserting the cooling unit 400 into a space between the module case 200 and the venting unit 300.

At least a portion of the cooling unit 400 may contact the outer surface of the module case 200. For example, referring to FIG. 4, a left portion of the cooling unit 400 may contact a right surface of the module case 200. In particular, all parts of the cooling unit 400 located in the venting unit V may contact the module case 200.

According to this configuration of the present disclosure, heat of the module case 200 may be more smoothly transferred to the cooling unit 400. Accordingly, heat generated from the cell assembly 100 may be easily released to the outside of the module case 200 through the cooling unit 400. Hence, cooling performance of the cell assembly 100 may be further improved.

The cooling unit 400 may include a cooling pipe, as shown in FIG. 2. The cooling pipe may have a hollow through which a cooling fluid flows. That is, the cooling pipe may include an inlet I2 at an end and an outlet O2 at the other end in FIG. 2. A cooling fluid, for example, cooling water, may be introduced through the inlet I2. The cooling fluid, that is, the cooling water, may absorb surrounding heat while flowing along the hollow of the cooling pipe. The cooling water may be discharged to the outside of the venting unit 300 together with heat through the outlet O2, thereby performing a heat dissipation function.

In the embodiment, the inlet I2 and the outlet O2 of the cooling pipe may be located close to the discharge outlet O1 of the venting unit 300, as shown in FIGS. 1 and 2. In particular, the inlet I2 and the outlet O2 of the cooling pipe may be located outside the discharge outlet O1 of the venting unit 300. A part or the whole of a pipe section of the cooling unit 400 between the inlet I2 and the outlet O2 may be inserted into the inner space of the venting unit 300.

According to this embodiment of the present disclosure, a process of assembling the battery module may be more easily performed. According to the embodiment, venting gas may be discharged from the inside of the venting unit 300 toward the discharge outlet O1, and cooling performance of the cooling unit 400 may be further improved.

The cooling pipe may be bent in the inner space of the venting unit 300, which will be further described with reference to FIG. 5.

FIG. 5 is a view illustrating some elements of a battery module, viewed from a side, according to an embodiment of the present disclosure. However, in FIG. 5, for convenience of explanation, the venting unit 300 is not shown, and only a position A3 where the venting unit 300 is mounted is shown. Furthermore, FIG. 5 is a view illustrating the battery module, viewed from the left to the right (+X direction), in a state where the left venting unit 300 is removed, in a configuration of the battery module of FIG. 1.

Referring to FIG. 5, the cooling pipe may be bent at least once in a section between the inlet I2 and the outlet O2. In more detail, referring to a configuration of FIG. 5, the cooling unit 400, that is, the cooling pipe, may include bent portions B1, B2, and B3 in a section between the inlet I2 and the outlet O2.

In particular, due to this bending configuration, there is one connected pipe, but a plurality of pipes may be provided in a direction perpendicular to a flow direction of venting gas, in the venting unit 300. For example, referring to an embodiment of FIG. 5, a flow direction of venting gas in the venting unit 300 may be a -Y axis direction that is a horizontal direction as marked by an arrow. A direction perpendicular to the flow direction of venting gas may be a vertical direction, that is, the Z axis direction, and four pipes may exist in the vertical direction.

Accordingly, according to this embodiment of the present disclosure, because venting gas contacts more cooling pipes, cooling efficiency of venting gas may be further improved.

In addition, according to this embodiment of the present disclosure, venting gas may collide with the cooling pipe due to a bent portion existing in the direction perpendicular to the flow direction of venting gas. For example, because the bent portions B 1 to B3 in FIG. 5 generally include portions extending in the vertical direction, venting gas may collide with a bent portion formed in a shape substantially perpendicular to the flow direction. Hence, in this process, a flame or an active material included in venting gas may be prevented from being discharged. Also, in this case, because venting gas contacts the cooling pipe at more portions, a temperature of the venting gas may be further lowered.

In the embodiment, a maximum width of the cooling unit 400 may be equal to or greater than a maximum width of the venting hole H1. A width may refer to a length in the direction perpendicular to the flow direction of venting gas. For example, in the embodiment of FIG. 5, because the flow direction of venting gas is the horizontal direction (-Y axis direction), the vertical direction (Z axis direction) perpendicular to the flow direction may be a width direction. Accordingly, a maximum width C2 of the cooling unit 400 may be a distance between a lowermost cooling pipe and an uppermost cooling pipe. A maximum width C1 of the venting hole H1 may refer to a distance between an upper end and a lower end of the venting hole H1. The following relation may be established between C2 and C1.

$$C2 \geq C1$$

Moreover, an outermost portion of the cooling unit 400 may be located outside an outermost portion of the venting hole H1. For example, in the embodiment of FIG. 5, a lowermost end of the cooling unit 400 may be located below a lowermost end of the venting hole H1, and an uppermost end of the cooling unit 400 may be located above an uppermost end of the venting hole H1.

According to this embodiment of the present disclosure, the cooling unit 400 may entirely cover venting gas discharged from the venting hole H1. That is, according to the embodiment, when venting gas is discharged from the venting hole H1, the venting gas may entirely contact the cooling unit 400. Accordingly, an effect of cooling or an effect of blocking a flame or spark by the cooling unit 400 may be more reliably achieved.

In the embodiment, because the cooling unit 400 and the venting unit 300 are attached to a side surface of the module case 200, a width direction may be the vertical direction. However, when the cooling unit 400 and the venting unit 300 are attached to a top surface or a bottom surface of the module case 200, a width direction may be the horizontal direction, for example, a left-right direction.

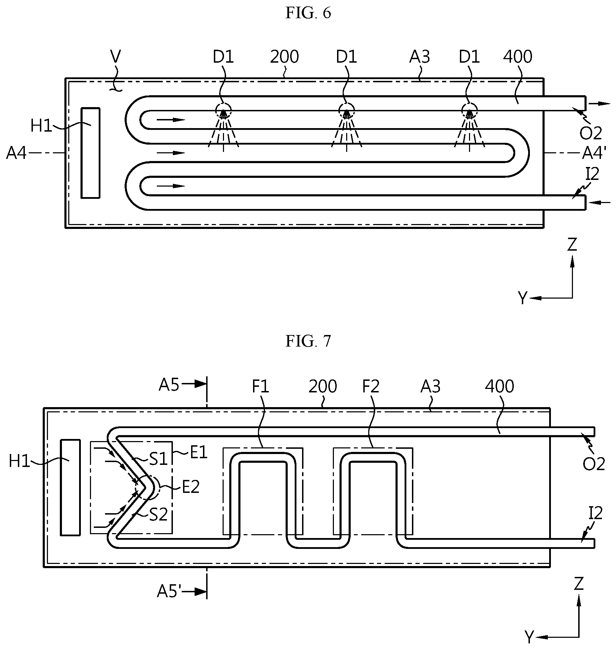

At least a portion of the cooling unit 400 may be ruptured by venting gas, which will be described in more detail with reference to FIG. 6.

FIG. 6 is a side view schematically illustrating a state where a portion of the cooling unit 400 is ruptured, in a battery module, according to an embodiment of the present disclosure.

Referring to FIG. 6, when venting gas is ejected from the cell assembly 100 into an inner space of the venting unit 300, the cooling unit 400 located in the inner space of the venting unit 300 may be at least partially ruptured by the venting gas. In more detail, a portion D1 of the cooling pipe may be ruptured in FIG. 6. Through the rupture portion, a cooling fluid in the cooling pipe may be sprayed into the inner space of the venting unit 300, that is, the venting channel V.

According to this embodiment of the present disclosure, the cooling unit 400 may lower a temperature of the cell assembly 100 in a normal situation, and may lower a temperature of venting gas discharged from the cell assembly and suppress a flame in an emergency situation. In addition, the cooling fluid may be sprayed in a direction different from a discharge direction of the venting gas. In this case, a spark, foreign material, and flame included in the venting gas may be prevented from being discharged. Furthermore, such an effect may be further improved when the cooling fluid is a liquid such as cooling water.

The cooling unit 400, in particular, the cooling pipe, may be formed of a material or shape that may be ruptured by a temperature or pressure of venting gas. For example, the cooling pipe may be formed of a thermally deformable resin material, or an aluminum material having a thickness of a certain thickness (e.g., 1 mm) or less.

In particular, a rupture portion of the cooling unit 400 may be pre-formed at a certain position. For example, a rupture portion of the cooling unit 400 may be pre-formed at the portion D1 in FIG. 6. The rupture portion may be ruptured by a pre-set temperature or pressure, in the cooling unit 400, in particular, the cooling pipe. For example, the cooling pipe may be formed of an aluminum material having a thickness of about 2 mm, and the specific portion D1 may be formed of an aluminum material having a thickness of 0.5 mm. Alternatively, the cooling pipe may be substantially formed of a metal material, and the specific portion D1 may be formed of a plastic material having a lower melting point. Alternatively, in the cooling pipe, an opening may be pre-formed in the portion D1, a cap for sealing the opening may be provided, and the cap may be configured to open the opening due to heat or pressure of venting gas. In these embodiments, the portion D1 exposes a hollow of the cooling pipe to the outside due to venting gas and allows a cooling fluid to leak out, and thus, may be referred to as a rupture portion.

According to this embodiment of the present disclosure, when venting gas flows in the venting unit 300, a cooling fluid from the cooling unit 400 may be rapidly discharged by the venting gas. In particular, in the embodiment, because a position where the cooling fluid is discharged is pre-determined by the rupture portion, the cooling fluid such as cooling water may be sprayed to an appropriate space in the venting unit 300.

Furthermore, a plurality of rupture portions may be formed in the cooling unit 400. For example, as shown in FIG. 6, a plurality of rupture portions D1 may be located in a discharge direction of venting gas in the cooling pipe, and may be spaced apart from each other.

In this case, the cooling fluid may be sprayed through the several rupture portions D1, and when venting gas is discharged to the outside from the venting channel V, the venting gas may contact the cooling fluid several times. Accordingly, an effect of cooling the venting gas or blocking a flame or spark may be further improved.

In particular, the venting unit 300 may be attached to side surfaces, for example, a left surface and a right surface, of the module case 200 as shown in many drawings. In this case, the rupture portion D1 may be located at an upper portion in the inner space of the venting unit 300.

For example, referring to the embodiment of FIG. 6, a vertical center line of the position A3 where the venting unit 300 is attached may be referred to as A4-A4'. The cooling unit 400, that is, the cooling pipe, may be located over and under the center line A4-A4'. In this case, the rupture portion D1 may be located at least over the center line A4-A4'.

In particular, the cooling pipe may be formed so that one cooling pipe is bent in the vertical direction in the inner space of the venting unit 300 to form a plurality of layers from bottom to top. For example, in FIG. 6, the cooling pipe may include a total of four layers in the vertical direction. In this case, the rupture portion may be formed on an uppermost layer, for example, on the fourth layer of FIG. 6, in the inner space of the venting unit 300.

According to this embodiment of the present disclosure, the venting gas may contact the cooling fluid as much as possible in the inner space of the venting unit 300. That is, as shown in FIG. 6, when the cooling fluid is sprayed downward from an upper portion of the venting channel V, the cooling fluid may be sprayed into the entire space in the vertical direction in the venting channel V. Hence, in this case, an effect of cooling venting gas and suppressing a flame or spark, by the spray of the cooling fluid, may be more reliably ensured.

Also, in the embodiment, the cooling fluid may flow from a lower layer to an upper layer. For example, as shown in FIG. 6, when the cooling pipe includes a total of four layers from the first layer to the fourth layer in the inner space of the venting unit 300, the cooling fluid may be introduced into the first layer that is a lowermost layer, and the cooling fluid may flow out from the fourth layer that is an uppermost layer. That is, the inlet I2 may be located at the first layer that is a lowermost layer, and the outlet O2 may be located at the fourth layer that is an uppermost layer.

According to this configuration of the present disclosure, when the cooling fluid is sprayed from the fourth layer that is an uppermost layer, the fooling fluid may flow from the first layer to the third layer of the cooling pipe. Accordingly, due to the cooling fluid sprayed from the fourth layer, an effect of cooling venting gas and suppressing a flame or the like may be ensured, and due to the cooling fluid flowing through the cooling pipe from the first layer to the third layer, a cooling effect of the venting unit 300 may also be achieved. In addition, due to the cooling fluid flowing through the cooling pipe from the first layer to the third layer, a function of absorbing heat from the cell assembly 100 existing in the module case 200 may also be performed.

FIG. 7 is a side view schematically illustrating elements of a battery module, according to another embodiment of the present disclosure. In FIG. 7, for convenience of explanation, the venting unit 300 is removed. When various embodiments of the present disclosure including the present embodiment are described, for parts to which descriptions of the above embodiments are equally or similarly applicable, descriptions thereof are omitted, and different parts are mainly described.

Referring to FIG. 7, the cooling unit 400 may have a pipe shape that is bent in an inner space of the venting unit 300, and may include an inclined portion E1 that is inclined at a certain angle (e.g., an acute angle) rather than a right angle with respect to a flow direction of venting gas. In particular, the inclined portion may include an upper inclined portion (first inclined portion) S1 and a lower inclined portion (second inclined portion) S2. In this case, the upper inclined portion S1 may be inclined toward a discharge outlet toward the bottom, and the lower inclined portion S2 may be inclined toward the discharge outlet toward the top. A lower end of the upper inclined portion S1 and an upper end of the lower inclined portion S2 may be connected to each other at a vertex portion E2.

According to this embodiment of the present disclosure, venting gas may be concentrated on a specific portion. For example, in a configuration of FIG. 7, venting gas discharged from the venting hole H1 to the venting channel V may flow along the upper inclined portion S1 and the lower inclined portion S2, as marked by an arrow. The venting gas flowing along the inclined portions may be concentrated on the vertex portion E2 where the upper inclined portion S1 and the lower inclined portion S2 meet each other. Accordingly, in an entire section of the cooling pipe, the vertex portion E2 may be more easily ruptured than other portions.

Also, referring to the configuration of FIG. 7, the cooling pipe, that is, the cooling unit 400, may include protrusions F1 and F2 protruding in a direction perpendicular to the flow direction of venting gas. Furthermore, the protrusions F1 and F2 may be implemented by bending the cooling pipe.

According to this embodiment of the present disclosure, because the protrusions F1 and F2 extend long in the direction (vertical direction) perpendicular to the flow direction (horizontal direction) of venting gas, cooling efficiency of venting gas may be improved. In addition, in this case, a flame or particles included in the venting gas may be prevented from being discharged to the outside.

In particular, the protrusions F1 and F2 may be located at a rear portion more than the inclined portion E1, furthermore, the vertex portion E2 that is a ruptured position, in the flow direction of venting gas. In this case, a cooling fluid sprayed from the ruptured position E2 may be prevented from being directed toward the discharge outlet of the venting unit 300. In particular, in the configuration of FIG. 7, due to a shape of the cooling pipe and the ruptured position E2, the cooling fluid may be directed in the -Y axis direction. In this case, because the protrusions F1 and F2 suppress the cooling fluid from moving in the - Y axis direction, the cooling fluid may not be easily discharged to the discharge outlet O1 but may remain in the venting channel V as much as possible. Hence, in this case, an effect of cooling and blocking a flame by the cooling fluid may be further improved.

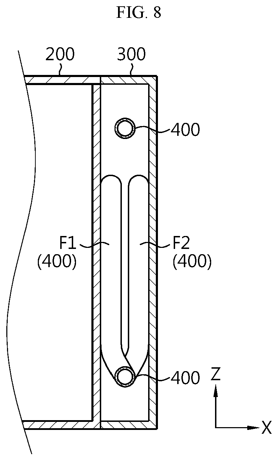

FIG. 8 is a cross-sectional view schematically illustrating elements of a battery module, according to still another embodiment of the present disclosure. For example, FIG. 8 illustrates a cross-sectional view taken along line A5-A5', in a state where the venting unit 300 is mounted, in a configuration of the battery module of FIG. 7.

Referring to FIG. 8, when the cooling unit 400 is located in a space between an outer surface of the module case 200 and an inner surface of the venting unit 300, a part may be located close to the outer surface of the module case 200 and another part may be located close to the inner surface of the venting unit 300. For example, in FIG. 8, as different portions of the same cooling pipe, a portion F1 may contact the outer surface of the module case 200 and a portion F2 may contact the inner surface of the venting unit 300.

According to this configuration of the present disclosure, because a size (diameter) of the cooling pipe is less than a width of the venting channel V, the cooling pipe may be prevented from completely blocking a flow of venting gas and an effect of cooling and blocking a flame or the like by the cooling pipe may be further improved. For example, in a configuration of FIG. 8, the cooling pipe may be alternately formed in left and right directions. In this case, venting gas may generally flow in a front-back direction (Y axis direction) in the venting channel V, but may be partially bent and flow in a left-right direction (X axis direction) due to the cooling pipe. Accordingly, in this case, cooling efficiency of venting gas may be improved, and an effect of suppressing movement of a spark or flame included in the venting gas may be further improved.

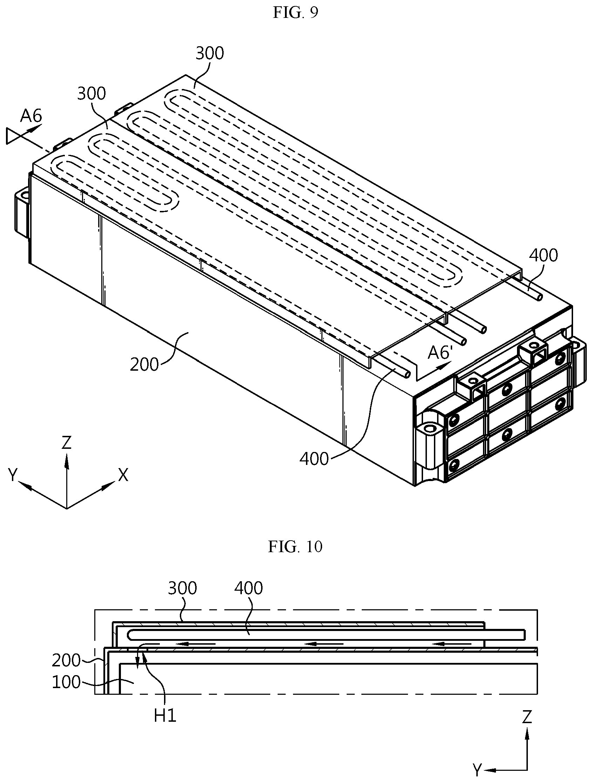

FIG. 9 is a perspective view schematically illustrating elements of a battery module, according to another embodiment of the present disclosure. FIG. 10 is a cross-sectional view taken along line A6-A6' of FIG. 9, according to an example. When the present embodiment is described, a difference from the above embodiments will be mainly described.

Referring to FIGS. 9 and 10, the venting unit 300 may be coupled to an upper portion of the module case 200. In this case, at least a part of the cooling unit 400 may be provided in an inner space of the venting unit 300. In particular, when the venting hole H1 is located in a top surface of the module case 200, the venting unit 300 may be attached to the upper portion of the module case 200 to correspond to the venting hole H1. The cooling unit 400 may also be located on the upper portion of the module case 200. For example, at least a portion of the cooling unit 400 may be located in a space between an outer surface of the upper portion of the module case 200 and an inner surface of the venting unit 300.

Furthermore, when the venting hole H1 is formed on left and right sides of the top surface of the module case 200, the venting unit 300 may be attached to left and right sides of the upper portion of the module case 200 as shown in FIG. 9. In this case, when venting gas is discharged from the venting hole H1, the venting gas may move forward (-Y axis direction) in FIG. 9 and may be discharged to the outside.

According to this embodiment of the present disclosure, because the venting hole H1 is formed in the upper portion of the module case 200, high-temperature venting gas may be more rapidly discharged. Also, in this case, when a cooling fluid such as water is discharged from the cooling unit 400, the discharged cooling fluid may be easily introduced into the module case 200 as marked by an arrow in FIG. 10. Accordingly, a fire in the module case 200 may be more reliably suppressed.

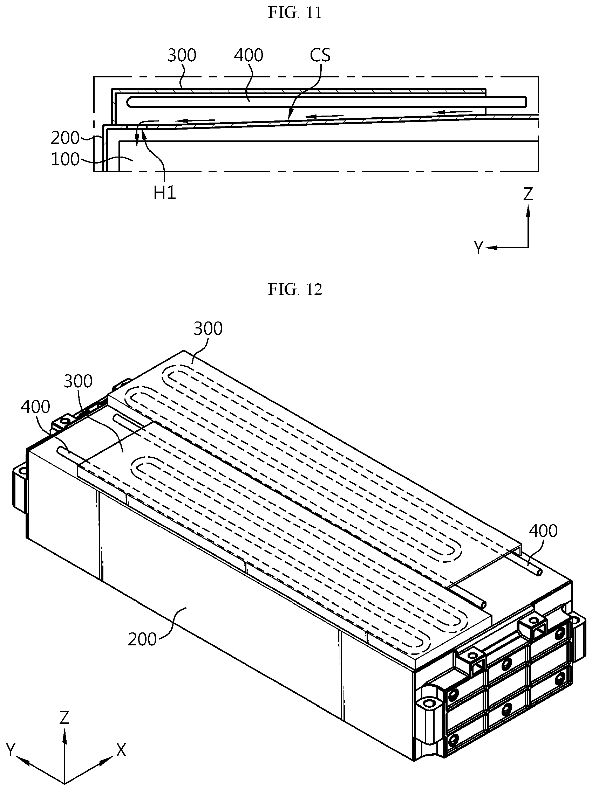

FIG. 11 is a view schematically illustrating some elements of a battery module, according to still another embodiment of the present disclosure. In particular, FIG. 11 may be a cross-sectional view taken along line A6-A6' of FIG. 9, according to another example.

Referring to FIG. 11, a case inclined portion CS may be formed outside the module case 200. In particular, the case inclined portion CS may be formed outside the module case so that a height gradually decreases along the venting hole H1. Furthermore, the venting hole H1 may be located at a lowermost portion on an upper outer surface of the module case 200.

According to this embodiment of the present disclosure, a cooling fluid discharged from the cooling unit 400 may be more smoothly and rapidly introduced into the module case 200 via the venting hole H1, as marked by an arrow in FIG. 11. Hence, in this embodiment, a fire in the module case 200 may be more effectively suppressed.

FIG. 12 is a perspective view schematically illustrating elements of a battery module, according to still another embodiment of the present disclosure. When the present embodiment is described, a difference from the above embodiments will be mainly described.

Referring to FIG. 12, two venting units 300 may be respectively coupled to a left side and a right side on a top surface of the module case 200, and venting directions of the venting units 300 may be opposite to each other. That is, a venting direction of the venting unit 300 provided on the left side of the top surface of the module case 200 may be a rearward direction (+Y axis direction), and a venting direction of the venting unit 300 provided on the right side of the top surface of the module case 200 may be a forward direction (-Y axis direction). In this embodiment, portions where an end of the cooling unit 400 protrudes may be opposite to each other in the venting unit 300 on the left side of the top surface and the venting unit 300 on the right side of the top surface.

According to this embodiment of the present disclosure, because venting directions of multiple venting units 300 are different from each other, venting gas may be distributed and may not be concentrated on a specific portion. Accordingly, in this case, overheating of a specific portion due to concentration of venting gas may be prevented.

Also, at least a portion of the cooling unit 400 may be located in an inner space of the module case 200. For example, a portion of the cooling unit 400 may be inserted into the inner space of the module case 200 through the venting hole H1. In particular, a rupture portion of the cooling unit 400 may be located in the inner space of the module case 200.

According to this embodiment, a fire of the battery module may be more easily suppressed. In particular, when the cooling unit 400 is ruptured in the inner space of the module case 200, a cooling fluid may be directly injected into the inner space of the module case 200. Accordingly, fire extinguishing through the cooling fluid may be more effectively and rapidly performed.

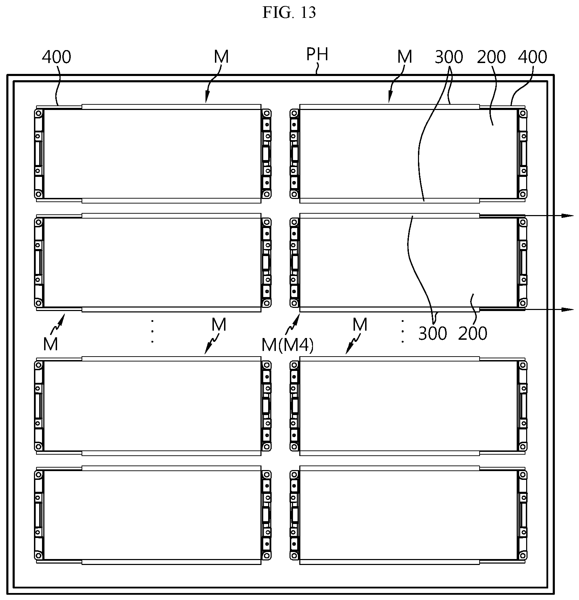

FIG. 13 is a view schematically illustrating a battery pack, viewed from above, according to an embodiment of the present disclosure. Even in the present embodiment, for parts to which descriptions of the above embodiments are equally or similarly applicable, descriptions thereof are omitted.

Referring to FIG. 13, a battery pack according to the present disclosure may include one or more battery modules M according to the present disclosure. In particular, to increase capacity and/or output, the battery pack according to the present disclosure may include a plurality of battery modules M according to the present disclosure. In this case, the above-described configurations may be applied to each battery module M. For example, each battery module M may include the cell assembly 100, the module case 200, the venting unit 300, and the cooling unit 400. The plurality of battery modules M may be accommodated in a pack housing PH.

In the battery pack according to the present disclosure, even when a thermal event occurs in a specific battery module, safety above a certain level may be ensured. In particular, the battery modules M included in the battery pack according to the present disclosure may include the venting unit 300 through which venting gas may be discharged as marked by an arrow. **In** particular, the cooling unit 400 may be located in a discharge path of venting gas. Accordingly, a temperature of venting gas discharged to the outside may be lowered, and factors that may cause firing such as a spark, electrode discharged material, and carbide may not be included in the venting gas as much as possible. Hence, firing or propagation of thermal runway may be prevented from occurring in other battery modules M as well as around the corresponding battery module M.

**In** addition, in the battery pack according to the present disclosure, because a venting direction may be controlled through the venting unit 300 included in each battery module, venting gas may not be directly sprayed toward other battery modules. For example, as shown in FIG. 13, when a plurality of battery modules M are arranged in two columns, that is, a left column and a right column, in the pack housing, for the battery modules M of the left column, a spray direction of the venting unit 300 may be a leftward direction, and for the battery modules M of the right column, a spray direction of the venting unit 300 may be a rightward direction. In this case, when venting gas is discharged from a specific battery module, for example, M4, the venting gas may not be directed toward other battery modules, and thus, a thermal event may be more effectively prevented from spreading to other battery modules due to the venting gas.

Also, although not shown, the battery pack according to the present disclosure may further include, in an inner space of the pack housing PH, various elements of a battery pack well known at the time of filing the present application such as a battery management system (BMS), a bus bar, a relay, and a current sensor, in addition to the battery module M or the pack housing PH.

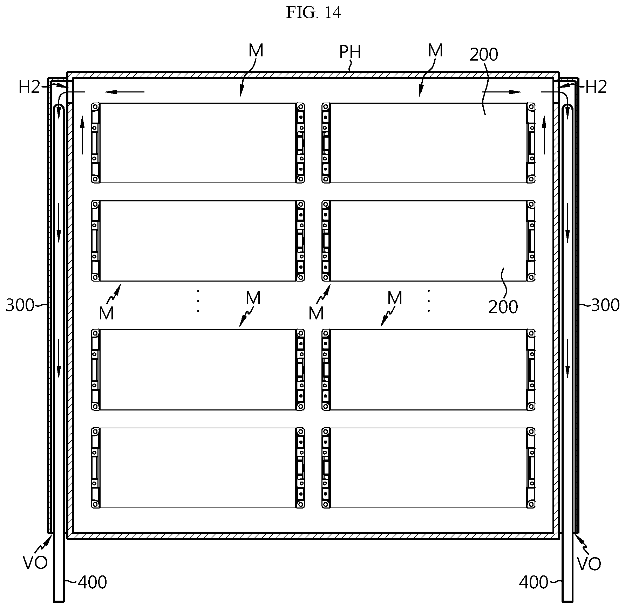

Also, in the above various embodiments, the venting unit 300 and the cooling unit 400 applied to the battery module may also be applied to the battery pack, which will be further described with reference to FIG. 14.

FIG. 14 is a view illustrating a battery pack, viewed from above, according to another embodiment of the present disclosure. For example, FIG. 14 may show elements of a battery pack in a state where an upper side of the pack housing PH is removed, like in FIG. 13. Even in the present embodiment, a difference from the above embodiments will be mainly described.

Referring to FIG. 14, a pack hole H2 may be formed in at least a side of the pack housing PH in which a plurality of battery modules M are accommodated. The pack hole H2 may be formed so that an inner space and an outer space of the pack housing PH communicate with each other. In particular, the pack hole H2 may function as a path through which gas or the like in the inner space of the pack housing PH is discharged to the outside.

In this configuration, the venting unit 300 and the cooling unit 400 according to the present disclosure may be mounted on the pack housing PH. In particular, as shown in FIG. 14, when the pack hole H2 is formed in the pack housing PH, the venting unit 300 may be attached to a portion where the pack hole H2 is formed, outside the pack housing PH. The cooling unit 400 may be provided in an inner space of the venting unit 300, that is, between an outer surface of the pack housing PH and an inner surface of the venting unit 300.

That is, the battery pack according to the embodiment may include one or more battery modules M, the pack housing PH, the venting unit 300, and the cooling unit 400, wherein the pack housing PH has an inner space in which the one or more battery modules M are accommodated and includes the pack hole H2, the venting unit 300 is mounted on the pack housing PH and configured to allow venting gas discharged from the pack hole H2 to be introduced and discharged to the outside, and the cooling unit 400 has at least a portion provided in a path through which venting gas flows and the cooling unit 400 is configured to absorb heat and release the heat to the outside.

In this case, venting gas or the like generated from an arbitrary battery module M may pass through the pack hole H2 as marked by an arrow of FIG. 14, and may be introduced into the venting unit 300 located outside the pack housing PH. As described above, due to the cooling unit 400, the venting gas may be cooled and a spark, electrode discharged material, and carbide included in the venting gas may be prevented from being discharged to the outside.

As in this embodiment, various embodiments of the venting unit 300 and the cooling unit 400 mounted on the module case 200 may be equally or similarly applied to the venting unit 300 and the cooling unit 400 mounted on the pack housing PH.

As shown in FIG. 14, the venting unit 300 and the cooling unit 400 may not be included in each battery module M. However, as shown in FIG. 13, the venting unit 300 and the cooling unit 400 may be separately attached to each battery module M.

Also, in an embodiment of FIG. 14, the cell assembly 100 is accommodated in the module case 200 and provided in a modular form in the pack housing PH. However, in the battery pack according to another embodiment of the present disclosure, the cell assembly 100 may not be accommodated in the module case 200, but may be directly mounted on the pack housing PH in a cell to pack manner. In this case, the battery module M may include only the cell assembly 100, without including the module case 200. A control device such as a battery management system (BMS) and electronic components such as a relay and a current sensor may be accommodated together in the inner space of the pack housing PH.

The battery module according to the present disclosure or the battery pack according to the present disclosure may be applied to a vehicle such as an electric vehicle or a hybrid vehicle. That is, a vehicle according to the present disclosure may include the battery module according to the present disclosure or the battery pack according to the present disclosure. Also, the vehicle according to the present disclosure may include various other elements included in a vehicle in addition to the battery module or the battery pack. For example, the vehicle according to the present disclosure may further include a vehicle body, a motor, or a control device such as an electronic control unit (ECU) in addition to the battery module according to the present disclosure.

Also, the battery module according to the present disclosure may be applied to an energy storage system (ESS). That is, an ESS according to the present disclosure may include the battery module according to the present disclosure or the battery pack according to the present disclosure.

It will be understood by one of ordinary skill in the art that when terms indicating directions such as upper, lower, left, right, front, and rear are used, these terms are only for convenience of explanation and may vary according to a position of a target object, a position of an observer, etc.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

[Description of Reference Numerals]

    100: cell assembly
    200: module case

300: venting unit
310: main body, 320: bent portion
400: cooling unit
H1: venting hole
O1: discharge outlet
V: venting channel
I2: inlet, O2: outlet
D1: rupture portion
S1: upper inclined portion, S2: lower inclined portion
CS: case inclined portion
M: battery module
PH: pack housing
H2: pack hole

**Claims**

1. A battery module (M) comprising:

   a cell assembly (100) comprising one or more battery cells;
   a module case (200) having an inner space in which the cell assembly (100) is accommodated, the module case (200) comprising a venting hole (H1) through which venting gas generated from the cell assembly (100) is discharged;
   a venting unit (300) provided outside the module case (200), and configured to allow venting gas discharged from the venting hole (H1) to be introduced and discharged to an outside; and
   a cooling unit (400) comprising at least a portion provided in a path through which the venting gas flows, the cooling unit (400) being configured to absorb heat and release the heat to an outside.

2. The battery module (M) according to claim 1, wherein at least a portion of the cooling unit (400) is provided in the venting unit (300).

3. The battery module (M) according to claim 1, wherein the venting unit (300) has a plate shape in which at least an end is bent, and the bent end of the venting unit (300) is attached to an outer surface of the module case (200).

4. The battery module (M) according to claim 1, wherein at least a portion of the cooling unit (400) is located between an outer surface of the module case (200) and an inner surface of the venting unit (300).

5. The battery module (M) according to claim 1, wherein at least a portion of the cooling unit (400) contacts an outer surface of the module case (200).

6. The battery module (M) according to claim 1, wherein the cooling unit (400) comprises a cooling pipe comprising a hollow through which a cooling fluid flows.

7. The battery module (M) according to claim 6, wherein at least a portion of the cooling pipe is bent in an inner space of the venting unit (300).

8. The battery module (M) according to claim 1, wherein a rupture portion (D1) configured to be ruptured by a pre-set temperature or pressure is pre-formed at a certain position in the cooling unit (400).

9. The battery module (M) according to claim 8, wherein the venting unit (300) is located on a side surface of the module case (200),
   wherein the rupture portion (D1) is located at an upper portion in an inner space of the venting unit (300).

10. A battery pack comprising the battery module (M) according to any one of claims 1 through 9.

11. A vehicle comprising the battery module (M) according to any one of claims 1 through 9.

**Patentansprüche**

1. Batteriemodul (M) aufweisend:

   eine Zellenanordnung (100), die eine oder mehrere Batteriezellen aufweist;
   ein Modulgehäuse (200), das einen Innenraum aufweist, in dem die Zellenanordnung (100) aufgenommen ist, wobei das Modulgehäuse (200) ein Entlüftungsloch (H1) aufweist, durch das von der Zellenanordnung (100) erzeugtes Entlüftungsgas abgegeben wird;
   eine Entlüftungseinheit (300), die außerhalb des Modulgehäuses (200) bereitgestellt ist und konfiguriert ist, zu ermöglichen, dass von dem Entlüftungsloch (H1) abgegebenes Entlüftungsgas eingeleitet und nach außen abgegeben wird; und
   eine Kühleinheit (400), die mindestens einen Abschnitt aufweist, der in einem Pfad bereitgestellt ist, durch den das Entlüftungsgas strömt, wobei die Kühleinheit (400) konfiguriert ist, Wärme zu absorbieren und die Wärme nach außen abzugeben.

2. Batteriemodul (M) nach Anspruch 1, wobei mindestens ein Abschnitt der Kühleinheit (400) in der Entlüftungseinheit (300) bereitgestellt ist.

3. Batteriemodul (M) nach Anspruch 1, wobei die Entlüftungseinheit (300) eine Plattenform aufweist, in der mindestens ein Ende gebogen ist, und das gebogene Ende der Entlüftungseinheit (300) an einer Außenfläche des Modulgehäuses (200) angebracht ist.

**4.** Batteriemodul (M) nach Anspruch 1, wobei mindestens ein Abschnitt der Kühleinheit (400) zwischen einer Außenfläche des Modulgehäuses (200) und einer Innenfläche der Entlüftungseinheit (300) angeordnet ist.

**5.** Batteriemodul (M) nach Anspruch 1, wobei mindestens ein Abschnitt der Kühleinheit (400) eine Außenfläche des Modulgehäuses (200) berührt.

**6.** Batteriemodul (M) nach Anspruch 1, wobei die Kühleinheit (400) ein Kühlrohr aufweist, das einen Hohlraum aufweist, durch den ein Kühlfluid strömt.

**7.** Batteriemodul (M) nach Anspruch 6, wobei mindestens ein Abschnitt des Kühlrohrs in einem Innenraum der Entlüftungseinheit (300) gebogen ist.

**8.** Batteriemodul (M) nach Anspruch 1, wobei ein Bruchabschnitt (D1), der konfiguriert ist, durch eine voreingestellte Temperatur oder einen voreingestellten Druck gebrochen zu werden, an einer bestimmten Position in der Kühleinheit (400) vorgeformt ist.

**9.** Batteriemodul (M) nach Anspruch 8, wobei die Entlüftungseinheit (300) an einer Seitenfläche des Modulgehäuses (200) angeordnet ist,
wobei der Bruchabschnitt (D1) an einem oberen Abschnitt in einem Innenraum der Entlüftungseinheit (300) angeordnet ist.

**10.** Batteriepack aufweisend das Batteriemodul (M) nach einem der Ansprüche 1 bis 9.

**11.** Fahrzeug aufweisend das Batteriemodul (M) nach einem der Ansprüche 1 bis 9.

**Revendications**

**1.** Module de batterie (M) comprenant :

un ensemble de cellules (100) comprenant une ou plusieurs cellules de batterie ;
un boîtier de module (200) possédant un espace intérieur dans lequel l'ensemble de cellules (100) est installé, le boîtier de module (200) comprenant un orifice d'évacuation (H1) par lequel le gaz de purge généré par l'ensemble de cellules (100) est évacué ;
un dispositif de purge (300) agencé hors du boîtier de module (200), et configuré pour permettre l'introduction du gaz de purge évacué par l'orifice d'évacuation (H1), et son évacuation à l'extérieur ; et
un dispositif de refroidissement (400) comprenant au moins une partie agencée dans un chemin par lequel s'écoule le gaz de purge, le dispositif de refroidissement (400) étant configuré pour absorber de la chaleur, et refouler la chaleur à l'extérieur.

**2.** Module de batterie (M) selon la revendication 1, au moins une partie du dispositif de refroidissement (400) étant agencée dans le dispositif de purge (300).

**3.** Module de batterie (M) selon la revendication 1, le dispositif de purge (300) ayant une forme de plaque dans laquelle au moins un bout est plié, et le bout plié du dispositif de purge (300) étant fixé sur une surface extérieure du boîtier de module (200).

**4.** Module de batterie (M) selon la revendication 1, au moins une partie du dispositif de refroidissement (400) étant située entre une surface extérieure du boîtier de module (200) et une surface intérieure du dispositif de purge (300).

**5.** Module de batterie (M) selon la revendication 1, au moins une partie du dispositif de refroidissement (400) étant au contact d'une surface extérieure du boîtier de module (200).

**6.** Module de batterie (M) selon la revendication 1, le dispositif de refroidissement (400) comprenant un tuyau de refroidissement comprenant une dépression à travers laquelle s'écoule un fluide de refroidissement.

**7.** Module de batterie (M) selon la revendication 6, au moins une partie du tuyau de refroidissement étant pliée dans un espace intérieur du dispositif de purge (300).

**8.** Module de batterie (M) selon la revendication 1, une partie de rupture (D1) configurée pour être rompue par une température ou une pression préréglée étant préformée dans une certaine position du dispositif de refroidissement (400).

**9.** Module de batterie (M) selon la revendication 8, le dispositif de purge (300) étant situé sur une surface latérale du boîtier de module (200),
la partie de rupture (D1) étant située dans une partie supérieure dans un espace intérieur du dispositif de purge (300).

**10.** Bloc-batterie comprenant le module de batterie (M) selon une quelconque des revendications 1 à 9.

**11.** Véhicule comprenant le module de batterie (M) selon une quelconque des revendications 1 à 9.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

**EP 4 287 381 B1**

**Patent documents cited in the description**

- KR 1020210138849

- JP 2014160571 A